# FASCICULE DE BREVET EUROPEEN

(11) **EP 1 130 074 B1**
(45) Date de publication et mention de la délivrance du brevet: **24.09.2008**
(21) Numéro de dépôt: 01400438.6
(22) Date de dépôt: 20.02.2001
(51) Int. Cl.: C09K 8/08, E21B 33/138, E21B 43/25

(54) **Additif réducteur de filtrat et fluide de puits contenant cet additif**
Filtratreduzierungsadditiv und Bohrspülung
Filtrate reducing additive and well fluid containing it

(30) Priorité: 02.03.2000 FR 0002811
(43) Date de publication de la demande: 05.09.2001
(73) Titulaire: Institut Français du Pétrole, 92852 Rueil-Malmaison Cedex (FR)
(72) Inventeur: Dubois, Isabelle, 7210 Avon (FR); Rousseau, Lionel, 78440 Issou (FR); Audibert Hayet, Annie, 78290 Croissy Sur Seine (FR)

(56) Documents cités:
- EP-A- 0 852 235
- FR-A- 2 516 533
- US-A- 4 822 500
- US-A- 5 009 267
- US-A- 5 728 652

## Description

La présente invention a pour objet de proposer un additif pour fluide de puits. Elle concerne également l'application de cet additif pour contrôler la filtration d'un fluide de puits à travers la paroi dudit puits. L'invention est avantageusement utilisée pour des opérations de forage et/ou de complétion des puits pétroliers ayant une température supérieure à 12°C.

Les puits forés dans le sous-sol à de fortes profondeurs, ou qui ont une température de fond élevée, requièrent des fluides de forage stables et qui présentent des propriétés satisfaisantes vis-à-vis de l'environnement de fond, notamment de la température. On rappellera, de plus, que le cake formé sur les parois du puits doit présenter une faible perméabilité et une faible épaisseur afin de limiter la réduction de l'espace annulaire et l'endommagement de la formation.

Les amidons sont des polymères naturels issus de la biomasse. A l'état natif, les amidons se présentent sous forme granulaire. Ils peuvent être de différentes origines (par exemple céréales, tubercules ou légumineuses) et le diamètre des grains peut atteindre 100 µm. Ils sont constitués de deux chaînes macromoléculaires, l'amylose et l'amylopectine. Ces macromolécules sont composées d'unités anhydroglucose reliées en majorité par des liaisons α-1,4 et quelques liaisons α-1,6 La proportion entre l'amylose et l'amylopectine est variable et est fonction de l'espèce considérée. Elle varie entre 1 et 35 % en masse pour l'amylose et entre 65 et 99 % en masse pour l'amylopectine.

A l'état natif, les amidons sont insolubles à froid. Les propriétés physico-chimiques des grains d'amidons sont gouvernées par le processus de gélatinisation, qui est un processus hydrothermique.

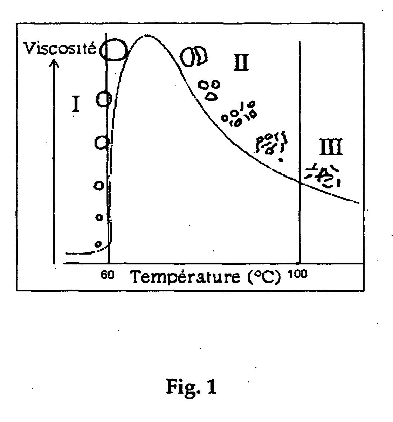

On sait qu'une modification chimique du grain d'amidon peut permettre le déplacement de la température de gélatinisation et l'amélioration de la stabilité thermique ou mécanique de ces composés. Ainsi, les amidons peuvent être réticulés (par exemple par l'épichlorohydrine ou l'acide adipique) et/ou alkylés (par exemple hydroxyalkylés ou carboxyalkylés). Les amidons natifs ou modifiés peuvent être classés dans une des trois zones I, II et III définies dans la demande de brevet -EP-A-1 130 392 dont le contenu est incorporé dans la présente description du simple fait de sa mention. Les zones I, II et III sont représentées sur la figure 1 annexée.

On connaît par ailleurs la demande de brevet EP-A-0 852 235, qui décrit des polymères d'amidon modifié dérivés d'amidon non modifié qui ont une teneur en amylopectine d'au moins 80 % en masse. Ces amidons peuvent être utilisés comme additifs de puits après modification physique, par exemple par traitement hydrothermique, ou chimique, par exemple par réticulation et carboxyméthylation. Cependant, ce document ne mentionne pas l'état dans lequel l'amidon est utilisé, sous sa forme granulaire ou sous sa forme macromoléculaire.

Le document US-A-5,009,267 décrit un additif de puits comprenant le mélange d'un amidon alkylé et réticulé et d'un amidon alkylé, utilisé pour contrôler la filtration d'un fluide dans la paroi dudit puits sans indiquer les degrés de substitution ni de réticulation de l'amidon.

Le document FR -2 516 533 décrit une composition utilisable pour augmenter la viscosité et réduire la perte en fluide de systèmes aqueux utilisés comme fluides de puits, la composition comprenant notamment une quantité efficace d'un hydroxyéthyl amidon réticulé.

Les documents US-B-4,822,500 et US-B-5,725,652 proposent d'utiliser des dérivés d'amidon ,notamment réticulés, pour améliorer les caractéristiques de suspension et réduire les pertes en fluide de puits.

Des systèmes non réticulés seront sélectionnés en priorité au risque de limiter la stabilité thermique. Puis des systèmes fragmentés et réticulés seront choisis, pour des diamètres moyens en particules inférieurs ou égaux à 60 µm. Ici, un compromis entre les propriétés de filtration et la stabilité thermique, doit être trouvé.

On a maintenant découvert de nouveaux additifs pour fluides de puits définis par leur composition qui comprend au moins un amidon sous forme alkylée et réticulée et au moins un amidon non réticulé. De tels additifs présentent des caractéristiques avantageuses notamment pour contrôler la filtration d'un fluide de puits à travers la paroi de celui-ci. En effet, si l'on sélectionne des systèmes non réticulés, on risque de limiter la stabilité thermique. En revanche, si l'on sélectionne des systèmes fragmentés et réticulés, pour des diamètres moyens de particules inférieurs ou égaux à 60 µm, la stabilité thermique peut être accrue mais c'est au détriment des propriétés de filtration.

L'invention repose sur le fait que, de manière surprenante, un compromis entre les propriétés de filtration et la stabilité thermique a pu être trouvé. Ainsi, les additifs de la présente invention permettent d'obtenir des propriétés satisfaisantes de filtration et de viscosité jusqu'à des températures d'environ 140°C. Ils peuvent donc être avantageusement utilisés dans des formulations de fluides de puits classiques ou des fluides qui contiennent de faibles teneurs en solides ou encore pour les formulations alourdies à l'aide de produits minéraux ou de sels solubles.

Les additifs pour fluides de puits selon l'invention sont définis d'une manière générale par le fait qu'ils comprennent le mélange d'au moins un amidon alkylé et réticulé (a) fragmentée et, à titre de milieu continu, d'au moins un polymère naturel (b) comprenant au moins un amidon natif ou alkylé sous forme macromoléculaire totalement hydrosoluble.

Par "amidons alkylés", on entend plus particulièrement les amidons hydroxyalkylés (tels que les amidons hydroxyéthylés et les amidons hydroxypropylés) et les amidons carboxyalkylés (tels que les amidons carboxyméthylés). Les amidons (a) sont également réticulés, par exemple au moyen de l'épichlorhydrine ou de l'acide adipique.

Les amidons (a) modifiés (alkylés et réticulés) qui n'ont pas subi de traitement à plus de 70°C sont en général sous forme granulaire. Un traitement à une température de 70 à 100°C donne des amidons modifiés sous forme fragmentée.

Dans le mélange, l'amidon alkylé et réticulé (a) est en général alkylé avec un degré de substitution d'au moins 0,5 pour 100 unités anhydroglucose, puis réticulé entre 70 et 100 °C avec un degré de réticulation compris entre 0,05 % et 1 %.

L'amidon natif ou alkylé sous forme macromoléculaire hydrosoluble qui constitue un des éléments du polymère naturel (b) est obtenu par traitement à une température d'au moins 100°C.

Outre un amidon natif ou alkylé sous forme macromoléculaire hydrosoluble, le polymère naturel hydrosoluble (b) peut comprendre par exemple des dérivés de gomme guar ou de cellulose.

Le polymère naturel (b) comprenant au moins un amidon natif ou alkylé sous forme macromoléculaire totalement hydrosoluble présente en général une masse moléculaire moyenne en poids, déterminée par diffusion de la lumière, de 5 000 à 3 000 000, en général de l'ordre de 1 000 000.

Le mélange comprend de préférence de 40 à 60 % en masse d'au moins un amidon alkylé et réticulé et de 60 à 40 % en masse d'au moins un polymère naturel (b) comprenant au moins un amidon natif ou alkylé sous forme macromoléculaire totalement hydrosoluble.

La part de polymère naturel hydrosoluble (b) (par exemple l'amidon sous forme macromoléculaire hydrosoluble), qui sert de milieu continu, est au minimum de 40 % en masse du mélange additif, au risque de limiter la tenue en température de la formulation. Quel que soit le mélange considéré, ce type d'amidon hydrosoluble doit être présent. La part de l'amidon fragmenté, alkylé et réticulé ne doit pas dépasser les 60 % en masse du mélange, au risque d'amoindrir les propriétés de filtration des formulations par une augmentation de la perméabilité des cakes et du volume de filtrat. Ces mélanges préférés trouvent alors leur application en tant que réducteurs de filtrat dans une gamme de température élargie. De manière encore plus préférée, le mélange comprend au maximum 50 % en masse d'amidon alkylé et réticulé (a) et au minimum 50 % en masse de polymère naturel hydrosoluble (b), contenant de l'amidon sous forme macromoléculaire hydrosoluble.

Les additifs selon l'invention présentent des caractéristiques particulièrement avantageuses pour contrôler la filtration d'un fluide de puits dans la paroi dudit puits. Les formulations de fluides de puits contiennent alors les autres constituants classiques de ce type de fluides. Ces fluides sont avantageusement utilisés pour des opérations de forage et/ou de complétion de puits pétroliers dont la température est supérieure à 120°C.

Les exemples suivants illustrent l'invention sans la limiter.

### EXEMPLES

### Présentation des amidons :

Les amidons considérés dans ces exemples sont des dérivés de l'amidon de pomme de terre. Ils sont hydroxypropylés et éventuellement réticulés. Les échantillons étudiés seront référencés A, B et C.

Les caractéristiques de ces amidons sont présentées dans le Tableau 1.

**TABLEAU 1**

| **Référence de l'échantillon** | **Degré de substitution (DS)** | **Degré de réticulation (%)** | **Température de modification (°C)** | **Aspect de l'échantillon** |
|---|---|---|---|---|
| **A** | 0,5 | 0,1 | < 70 | Granules |
| **B** | 0,5 | 0,5 | 70 < T < 100 | Fragments |
| **C** | 0,5 | 0 | > 100 | Solution macro-moléculaire |

Dans ces essais, on étudie les divers additifs suivants : A, B et C, ainsi que Mél. 50/50, consistant en un mélange de masses égales de B et de C. A titre de comparaison, on étudie une cellulose anionique, désignée par IDFLR-XL®, et un amidon modifié, désigné par IDFLO®, commercialisés par la Société DOWELL-IDF, et le produit commercialisé sous la dénomination HOSTADRILL® par la Société HOECHST.

Les concentrations en ces divers additifs dans la formulation de base sont les suivantes :

| | |
|---|---|
| IDFLR-XL® : | 5,1 g/l |
| HOSTADRILL® : | 5,8 g/l |
| IDFLO® : | 11,4 g/l |
| A : | 15,0 g/l |
| B : | 15,0 g/l |
| C : | 15,0 g/l |
| Mél. 50/50: | 15,0 g/l |

La formulation de base (FB) utilisée dans les essais rapportés ci-après a la composition suivante :
Xanthane IDVIS® : 4 g/l, High Mod Prima (HMP) : 28,5 g/l, NaCl : 20 g/l, KCl : 20 g/l et calcite (IDCARB 75®) : 360 g/l, pour une densité finale de 1,2. (L'HMP est une argile de charge qui simule une contamination de la formulation par des déblais.)
Le pH est ajusté à 9,5 par de la soude 2 N.

### Essai 1 : Caractéristiques des différentes formulations testées.

On détermine la viscosité apparente (VA) et la viscosité plastique (VP), exprimées en mPa.s, la valeur de seuil (YV, de l'anglais « yield value »), exprimée en Pa. La viscosité apparente (VA) est la viscosité qui correspond à un cisaillement de 1020 s⁻¹. La viscosité plastique (VP) est la pente de la courbe qui représente la tension de cisaillement en fonction du taux de cisaillement. La valeur de seuil (YV) est la tension limite de cisaillement ou force minimale pour provoquer l'écoulement. Le Gel 0, exprimé en Pa, est obtenu à un gradient de cisaillement de 5 s⁻¹ après 30 secondes de cisaillement à 1020 s⁻¹ et 10 secondes de repos. Le Gel 10, exprimé en Pa, est obtenu après la mesure du Gel 0 à un cisaillement de 5 s⁻¹ après 10 minutes de repos ; la différence des deux valeurs caractérise la thixotropie du mélange.

L'appareillage utilisé est de type FANN 35 BAROID® et on opère à la température ambiante (25 °C).

Les caractéristiques sont présentées dans le Tableau 2.

**TABLEAU 2**

| **Additif à FB** | **VA** | **VP** | **YV** | **Gel 0** | **Gel 10** |
|---|---|---|---|---|---|
| **IDFLR-XL®** | 32 | 16 | 16 | 6 | 8 |
| **HOSTADRILL®** | 27 | 15 | 12 | 5 | 8,5 |
| **IDFLO®** | 28 | 16 | 12 | 5 | 6,5 |
| **A** | 40 | 23 | 13,5 | 4,5 | 7 |
| **B** | 38 | 25 | 13 | 4,5 | 8 |
| **C** | 40 | 30 | 10 | 4 | 5,5 |
| **Mél.** 5**0/50** | 44 | 24 | 20 | 6,5 | 9 |

### Essai 2 : Comparaison de l'efficacité en terme de filtration de différents mélanges d'amidon avec des réducteurs de filtrat classiques, pour des fluides à base de calcite.

On réalise la filtration dans les conditions Standard API, à la température ambiante (25 °C).

On détermine le volume de filtrat 30' exprimé en millilitre (ml), les épaisseurs de cake en millimètre (mm), la perméabilité à 120' du cake (K), ramenée à pression atmosphérique, exprimée en Darcy (1 Darcy # 1 µm²), et le carbone organique (COT), exprimé en mg/l de carbone (ou ppm de C).

Le rapport Cpf/Cplm exprime le rapport de la concentration en polymère dans le filtrat, lorsque celle-ci est constante, sur la concentration en polymère libre dans le mélange de départ. La concentration en polymère libre dans le mélange de départ est obtenue après centrifugation de la formulation à 38 000×g et déterminée à l'aide d'un analyseur de carbone TOC 5050 de marque SHIMADZU®. Les filtrats initiaux et ultrafiltrés sont dosés à l'aide du même analyseur.

La fraction de filtrat supérieure à 20 000 daltons représente, exprimée en %, la fraction endommageante du filtrat. Le filtrat supérieur à 20 000 daltons est obtenu après ultrafiltration de ce filtrat à travers une membrane de seuil de coupure correspondante.

Les résultats sont présentés dans le Tableau 3.

**TABLEAU 3**

| **Additif à FB** | **Vol. filtrat 30'** | **Ep. Cake 120'** | **K 120' E-06** | **COT Filtrat** | **Cpf / Cplm** | **Fraction de filtrat > 20 000 daltons** |
|---|---|---|---|---|---|---|
| **IDFLR-XL®** | 5,9 | 1,7 | 6,0 | 600 | 0,23 | 67 |
| **HOSTADRILL®** | 6,8 | 1,5 | 1,0 | 920 | 0,37 | 79 |
| **IDFLO®** | 3,7 | 1,0 | 0,4 | 140 | 0,10 | 50 |
| **A** | 8,0 | 2,0 | 1,0 | 480 | 0,63 | 20 |
| **B** | 8,1 | 2,0 | 1,4 | 640 | 0,42 | 29 |
| **C** | 3,0 | 1,3 | 0,35 | 1080 | 0,20 | 59 |
| **Mél. 50/50** | 4,4 | 2,0 | 1,0 | 600 | 0,2 | 37 |

La fraction endommageante du filtrat est moins importante pour les formulations qui renferment les amidons A, B et C que celle des formulations qui contiennent l'HOSTADRILL® ou l'IDFLR-XL®. La formulation qui contient le Mél. 50/50 possède des propriétés de filtration, filtrat 30' et épaisseur de cake à 120', proches de celles obtenues avec le mélange qui contient l'IDFLO®. Les différences de concentration de filtrat entre ces deux formulations résultent d'une différence de perméabilité du cake due à la présence de grains réticulés dans ce mélange. La concentration en carbone du filtrat (COT) est proportionnellement diminuée par rapport à celles obtenues en présence de l'échantillon B ou de l'échantillon C. La fraction endommageante du filtrat de la formulation qui contient le Mél. 50/50 reste très acceptable et est inférieure à celle obtenue en présence de l'amidon commercial IDFLO®. L'utilité d'un tel mélange par rapport aux mélanges qui renferment l'échantillon A, B ou C seul, est donc l'amélioration des propriétés de filtration et/ou de la qualité du filtrat. Le rapport Cpf/Cplm est très nettement abaissé par rapport à certains cas et se rapproche de celui obtenu avec le mélange qui contient l'IDFLO®.

### Essai 3 : Influence de la température sur l'efficacité de ces mélanges (110 °C)

On réalise l'essai dans les conditions Standard API, dans une cellule de test HP/HT, avec une pression de 5 MPa et une contre-pression de 1,5 MPa (dP = 3,5 MPa).

Les résultats sont présentés dans le Tableau 4.

**TABLEAU 4**

| **Additif à FB** | **Vol. filtrat 30'** | **Ep. Cake 120'** | **K 120' 1E-06** | **COT Filtrat** | **Cpf / Cplm** | **Fraction de filtrat > 20 000 daltons** |
|---|---|---|---|---|---|---|
| **IDFLR-XL®** | 21,4 | 11,0 | 1,3 | 620 | 0,24 | 53 |
| **HOSTADRILL®** | 20,0 | 5,5 | 1,2 | 1600 | 0,64 | 84 |
| **IDFLO®** | 13,0 | 3,5 | 0,2 | 300 | 0,12 | 42 |
| **A** | 35,0 | 6,5 | 1,0 | 750 | 0,98 | 80 |
| **B** | 37,0 | 6,0 | 1,1 | 1300 | 0,76 | 60 |
| **C** | 15,0 | 3,0 | 0,21 | 2000 | 0,53 | 75 |
| **Mél. 50/50** | 19,0 | 4,0 | 0,4 | 1100 | 0,36 | 64 |

L'épaisseur importante du cake après 2 heures de filtration montre que la formulation qui contient l'IDFLR-XL® perd ses propriétés de filtration à cette température et dans ce type de formulation. La concentration importante en carbone du filtrat (COT), ainsi que la fraction supérieure à 20 000 daltons, montrent que les formulations qui contiennent l'HOSTADRILL® ou l'amidon référencé C utilisé seul, perdent aussi leurs propriétés de filtration à 110 °C. A cette densité, la formulation qui renferme le Mél. 50/50 donne un cake peu épais après 2 heures de filtration. Le filtrat est moins endommageant, contrairement aux formulations qui contiennent de l'HOSTADRILL® ou de l'échantillon C utilisé seul. Les qualités de filtration de la formulation qui contient le Mél. 50/50 sont similaires à celles obtenues avec l'IDFLO®. On notera que le Mél. 50/50 apporte à la formulation une nette amélioration des qualités de filtration à 110 °C, mais aussi de la qualité des filtrats. En effet, par rapport aux formulations qui contiennent les produits pris séparément, soit le filtrat 30' et l'épaisseur du cake sont améliorés, soit la qualité du filtrat est meilleure. Le rapport Cpf/Cplm est ici très nettement abaissé. **Essai 4 :** Influence de la température sur l'efficacité de ces mélanges (140 °C)

On opère dans les conditions Standard API, dans une cellule de test HP/HT, avec une pression de 5 MPa et une contre-pression de 1,5 MPa (dP = 3,5 MPa).

Les résultats sont présentés dans le Tableau 5.

**TABLEAU 5**

| **Additif à FB** | **Vol. filtrat 30'** | **Ep. Cake 120'** | **K 120' E-06** | **COT Filtrat** | **Cpf / Cplm** | **Fraction de filtrat > 20 000 daltons** |
|---|---|---|---|---|---|---|
| **IDFLO®** | 13,8 | 8 | 0,5 | 1800 | 0,7 | 72 |
| **B** | 38,8 | 15 | 2,0 | 1260 | 0,82 | 60 |
| **Mél. 50/50** | 19,0 | 9 | 0,6 | 2000 | 0,67 | 85 |

La formulation qui contient le Mél. 50/50 possède des propriétés de filtration à 140 °C similaires à celles obtenues avec l'amidon commercial IDFLO® mais de meilleure qualité que celle qui contient l'amidon référencé B utilisé seul. On notera là aussi l'utilité du mélange qui n'évite pas les phénomènes de dégradation des différents produits à cette température (xanthane et échantillon C) mais qui limite leurs effets sur les qualités de la filtration.

### Essai 5 : Influence conjointe du cisaillement et de la température sur l'efficacité de ces mélanges.

On opère dans une cellule de filtration dynamique avec une pression de 3,5 MPa, une température de 80 °C et sous un cisaillement de 600 s⁻¹.

Les résultats sont présentés dans le Tableau 6.

**TABLEAU 6**

| **Additif à FB** | **Vol. filtrat 30'** | **Pente*** | **COT Filtrat** | **Cpf / Cplm** | **Fraction de filtrat > 20 000 daltons** |
|---|---|---|---|---|---|
| **IDFLR-XL®** | 20 | 0,0078 | 380 | 0,15 | 49 |
| **HOSTADRILL®** | 23 | 0,0096 | 600 | 0,24 | 66 |
| **IDFLO®** | 16 | 0,0064 | 200 | 0,07 | 27 |
| **B** | 27 | 0,0098 | 500 | 0,33 | 22 |
| **C** | 10 | 0,0055 | 1100 | 0,29 | 65 |
| **Mél. 50/50** | 14 | 0,0057 | 500 | 0,17 | 20 |

| | | | | | |
|---|---|---|---|---|---|
| * La pente de filtration est déterminée lorsque le volume de filtrat écoulé devient linéaire en fonction du temps; elle est exprimée en cm/min. | | | | | |

Le Mél. 50/50 permet conjointement une diminution du volume 30', une diminution nette de la concentration en carbone du filtrat et de la fraction endommageante. Les formulations qui contiennent les produits séparément ne rassemblent pas ces trois critères. D'autre part, les formulations qui contiennent les produits commerciaux ont des qualités de filtration amoindries dans ces conditions de filtration dynamique. Au contraire, la formulation qui contient le Mél. 50/50 possède de bonnes propriétés par une cohésion efficace des produits B et C qui le constituent.

En résumé, le choix des amidons selon leurs influences sur les paramètres de filtration peut être défini comme indiqué dans le tableau 7 qui suit.

**TABLEAU 7**

| **Additif à FB** | **Vol. filtrat 30'** | **Ep. Cake 120'** | **Cpf/Cplm** | **Fraction de filtrat > 20 000 daltons** |
|---|---|---|---|---|
| **0,7 MPa - 25 °C** | | | | |
| **A** | ↑ | ↑ | ↓ | ↓ |
| **B** | ↑ | ↑ | ↓ | ↓ |
| **C** | ↓ | ↓ | ↓ | ↓ |
| **B/C - Mél. 50/50** | ↓ | ↑ | ↓ | ↓ |

| **3,5 MPa -110 °C** | | | | |
|---|---|---|---|---|
| **A** | ↑ | ↑ | ↑ | ↑ |
| **B** | ↑ | ↑ | ↑ | ↑ |
| **C** | ↓ | ↓ | ↑ | ↑ |
| **B/C - Mél. 50/50** | ↓ | ↓ | ↓ | ↑ |

| **3,5 MPa -140 °C** | | | | |
|---|---|---|---|---|
| **B** | ↑ | ↑ | ↑ | ↑ |
| **B/C - Mél. 50/50** | ↓ | ↓ | ↑ | ↑ |

| **600 s⁻¹ - 80 °C** | | | | |
|---|---|---|---|---|
| **B** | ↑ | - | ↓ | ↓ |
| **C** | ↓ | - | ↓ | ↑ |
| **B/C - Mél. 50/50** | ↓ | - | ↓ | ↓ |

Ce tableau traduit une tendance par rapport aux normes de filtration. Une augmentation des paramètres liés à la filtration est traduite par le symbole ↑. Quant au symbole ↓, il traduit une diminution de ces paramètres, voire peu de changements.

En conclusion, les exemples ci-dessus montrent que:
- l'amidon alkylé et réticulé sous forme granulaire (A) a une très bonne stabilité en température (jusqu'à 160 °C). Cependant, son caractère fortement granulaire augmente de façon générale la perméabilité du cake. Les propriétés de filtration et la qualité du filtrat diminuent avec l'augmentation de la température ;
- l'amidon alkylé et réticulé fragmenté (B) a une bonne stabilité en température (jusqu'à 140 °C). Il présente un milieu plus ou moins composé de fragments et un milieu hydrosoluble. Les proportions de ces milieux dépendent du moment de la réticulation. L'aspect granulaire ou fragmenté, qu'il soit minoritaire ou majoritaire, rend le cake de filtration plus perméable et le filtrat plus endommageant ;
- l'amidon sous forme de solution macromoléculaire (C) a une tenue en température moins importante. Son caractère essentiellement suspendant donne à la formulation décrite des qualités de filtration acceptables. Les températures d'application ne dépasseront pas environ 140°C pour limiter une détérioration de la qualité du filtrat ;
- le mélange de masses égales d'amidon alkylé et réticulé fragmenté et d'amidon alkylé non réticulé sous forme d'une solution macromoléculaire (B/C) apporte une nette amélioration de la qualité de filtration et de la qualité des filtrats dans ce type de formulation. Qu'elle soit statique ou surtout dynamique, la filtration donne des résultats comparables, voire meilleurs que ceux obtenus avec les produits commerciaux.

## Revendications

1. Additif pour fluide de puits **caractérisé en ce qu'**il comprend le mélange d'au moins un amidon alkylé et réticulé (a) sous forme fragmentée et d'au moins un polymère naturel (b) comprenant au moins un amidon natif ou alkylé sous forme macromoléculaire totalement hydrosoluble et **en ce que** ledit amidon alkylé et réticulé (a) est alkylé avec un degré substitution d'au moins 0,5 pour 100 unités anhydroglucose et réticulé avec un degré de réticulation compris entre 0,05 % et 1 %.

2. Additif selon la revendication 1 **caractérisé en ce que** ledit mélange comprend de 40 à 60 % en masse d'amidon alkylé et réticulé (a) et de 40 à 60 % en masse dudit polymère naturel (b).

3. Additif selon la revendication 2 **caractérisé en ce que**, dans ledit mélange, la proportion d'amidon alkylé et réticulé (a) est au maximum de 50 % en masse et la proportion dudit polymère naturel (b) est au minimum 50 %.

4. Additif selon la revendication 1 **caractérisé en ce que** ledit amidon alkylé et réticulé (a) ayant subi un traitement à une température entre 70 et 100°C est sous forme fragmentée.

5. Additif selon l'une des revendications 1 à 4 **caractérisé en ce que** l'amidon sous forme macromoléculaire totalement hydrosoluble mis en jeu comme polymère naturel (b) est un amidon alkylé ayant subi un traitement à une température d'au moins 100°C.

6. Additif l'une des revendications 1 à 5 **caractérisé en ce que** ledit polymère (b) comprend en outre au moins un dérivé de gomme guar ou de cellulose.

7. Additif selon l'une des revendications 1 à 6 **caractérisé en ce que** la masse moléculaire dudit polymère naturel (b) est de l'ordre de 10⁶ g/mole.

8. Fluide de puits à base d'eau **caractérisé en ce qu'**il comprend un additif selon l'une des revendications 1 à 7.

9. Application de l'additif selon l'une des revendications 1 à 7 pour contrôler la filtration d'un fluide de puits dans la paroi dudit puits.

10. Application selon la revendication 9 pour des puits dont la température est supérieure à 120°C.

## Claims

1. An additive for a well fluid, **characterized in that** it comprises a mixture of at least one alkylated cross-linked starch (a) in a fragmented form and at least one natural polymer (b) comprising at least one native or alkylated starch in the completely hydrosoluble macromolecular form, and **in that** said alkylated and cross-linked starch (a) is alkylated with a degree of substitution of at least 0.5 per 100 anhydroglucose units and cross-linked with a degree of cross-linking in the range 0.05% to 1%.

2. An additive according to claim 1, **characterized in that** said mixture comprises 40% to 60% by weight of alkylated and cross-linked starch (a) and 40% to 60% by weight of said natural polymer (b).

3. An additive according to claim 2, **characterized in that** in said mixture, the proportion of alkylated and cross-linked starch (a) is a maximum of 50% by weight and the proportion of said natural polymer (b) is a minimum of 50%.

4. An additive according to claim 1, **characterized in that** said alkylated and cross-linked starch (a) which has undergone a treatment at a temperature in the range 70°C to 100°C is in the fragmented form.

5. An additive according to one of claims 1 to 4, **characterized in that** the starch in the completely hydrosoluble macromolecular form used as natural polymer (b) is an alkylated starch which has undergone a treatment at a temperature of at least 100°C.

6. An additive according to one of claims 1 to 5, **characterized in that** said polymer (b) further comprises at least one derivative of guar gum or of cellulose.

7. An additive according to one of claims 1 to 6, **characterized in that** the molecular mass of said natural polymer (b) is of the order of 10⁶ g/mole.

8. A water-based well fluid, **characterized in that** it comprises an additive according to one of claims 1 to 7.

9. Application of an additive according to one of claims 1 to 7 to control filtration of a well fluid into the wall of said well.

10. Application according to claim 9, for wells wherein the temperature is more than 120°C.

## Patentansprüche

1. Additiv für ein Bohrfluid, **dadurch gekennzeichnet, dass** es das Gemisch aus mindestens einer alkylierten und vernetzen Stärke (a) in fragmentierter Form und mindestens einem natürlichen Polymer (b) umfasst, das mindestens eine native oder alkylierte Stärke in makromolekularer, vollständig wasserlöslicher Form umfasst, und **dadurch**, dass die alkylierte und vernetzte Stärke (a) mit einem Substitutionsgrad von mindestens 0,5 für 100 Einheiten Anhydroglucose alkyliert ist, und mit einem Vernetzungsgrad im Bereich zwischen 0,05 % und 1 % vernetzt ist.

2. Additiv nach Anspruch 1, **dadurch gekennzeichnet, dass** das Gemisch 40 bis 60 Masse-% alkylierte und vernetzte Stärke (a) und 40 bis 60 Masse-% des natürlichen Polymers (b) umfasst.

3. Additiv nach Anspruch 2, **dadurch gekennzeichnet, dass** in dem Gemisch der Anteil an alkylierter und vernetzter Stärke (a) maximal 50 Masse-% beträgt, und der Anteil an natürlichem Polymer (b) mindestens 50 % beträgt.

4. Additiv nach Anspruch 1, **dadurch gekennzeichnet, dass** die alkylierte und vernetzte Stärke (a), die einer Behandlung bei einer Temperatur zwischen 70 und 100 °C unterzogen wurde, in fragmentierter Form vorliegt.

5. Additiv nach einem der Ansprüche 1 bis 4, **dadurch gekennzeichnet, dass** die Stärke in makromolekularer, vollständig wasserlöslicher Form, die als natürliches Polymer (b) eingesetzt wird, eine alkylierte Stärke ist, die einer Behandlung bei einer Temperatur von mindestens 100 °C unterzogen wurde.

6. Additiv nach einem der Ansprüche 1 bis 5, **dadurch gekennzeichnet, dass** das Polymer (b) ferner mindestens ein Guargummi- oder Cellulosederivat umfasst.

7. Additiv nach einem der Ansprüche 1 bis 6, **dadurch gekennzeichnet, dass** die Molekularmasse des natürlichen Polymers (b) in der Größenordnung von 10⁶ g/Mol liegt.

8. Bohrfluid auf Wasserbasis, **dadurch gekennzeichnet, dass** es ein Additiv nach einem der Ansprüche 1 bis 7 umfasst.

9. Anwendung des Additivs nach einem der Ansprüche 1 bis 7, um die Filtration eines Bohrfluids in der Bohrlochwandung zu kontrollieren.

10. Anwendung nach Anspruch 9 für Bohrlöcher, deren Temperatur oberhalb von 120 °C liegt.
